(19) Europäisches Patentamt / European Patent Office / Office européen des brevets

(11) **EP 2 514 113 B1**

(12) **FASCICULE DE BREVET EUROPEEN**

(45) Date de publication et mention de la délivrance du brevet:
**02.03.2016 Bulletin 2016/09**

(21) Numéro de dépôt: **10809014.3**

(22) Date de dépôt: **14.12.2010**

(51) Int Cl.:
**H04B 7/06** (2006.01)

(86) Numéro de dépôt international:
**PCT/FR2010/052722**

(87) Numéro de publication internationale:
**WO 2011/073571 (23.06.2011 Gazette 2011/25)**

(54) **PROCEDE DE TRANSMISSION D'UN SIGNAL SOURCE, PROCEDE DE RECEPTION D'UN SIGNAL EMIS, EMETTEUR, RECEPTEUR, SIGNAL ET PROGRAMMES D'ORDINATEUR CORRESPONDANTS**

VERFAHREN ZUR SENDUNG EINES QUELLENSIGNALS, VERFAHREN FÜR DEN EMPFANG EINES GESENDETEN SIGNALS, ENTSPRECHENDER SENDER, EMPFÄNGER, SIGNAL UND COMPUTERPROGRAMME

METHOD FOR TRANSMITTING A SOURCE SIGNAL, METHOD FOR RECEIVING A TRANSMITTED SIGNAL, CORRESPONDING TRANSMITTER, RECEIVER, SIGNAL AND COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2009 FR 0959152**

(43) Date de publication de la demande:
**24.10.2012 Bulletin 2012/43**

(73) Titulaire: **Orange**
**75015 Paris (FR)**

(72) Inventeurs:
• **LEGOUABLE, Rodolphe**
  **F-35510 Cesson Sevigne (FR)**
• **PHAN HUY, Dinh Thuy**
  **F-75004 Paris (FR)**
• **SIAUD, Isabelle**
  **F-35000 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 1 681 783      WO-A1-02/061969**

**Description**

**1. Domaine de l'invention**

Le domaine de l'invention est celui des communications numériques par voie hertzienne (transmission radio).

Plus précisément, l'invention concerne l'émission et la réception de signaux dans un système de transmission multi-antennes mettant en oeuvre au moins une antenne d'émission et au moins deux antennes de réception (systèmes SIMO, de l'anglais « Single Input Multiple Output » pour « Entrée Unique Sorties Multiples» ou MIMO, de l'anglais «Multiple Input Multiple Output » pour « Entrées Multiples Sorties Multiples »).

L'invention concerne plus particulièrement une technique d'émission et de réception permettant d'exploiter au mieux la diversité spatiale et la capacité de transmission d'un système multi-antennes, tout en minimisant la complexité en réception.

**2. Art antérieur**

L'état de l'art est relativement riche sur les systèmes MIMO.

Dans de tels systèmes de transmission mettant en oeuvre une pluralité d'antennes d'émission et/ou de réception, on cherche classiquement à exploiter au mieux la diversité spatiale, à augmenter le débit ou le rendement de transmission, ou encore à faire un compromis entre ces deux composantes.

Cependant, un inconvénient des techniques permettant une bonne exploitation de la diversité spatiale, comme les codes espace-temps en blocs (en anglais STBC pour « Space Time Block Codes »), par exemple de type Alamouti, réside dans le fait qu'elles ne permettent pas d'optimiser la capacité de transmission. Autrement dit, ces techniques de l'art antérieur permettent uniquement la transmission de données à faible débit.

A l'inverse, les techniques de transmission multi-antennes permettant d'obtenir un rendement optimal, comme par exemple les techniques à base de multiplexage spatial, présentent les inconvénients de requérir au moins autant d'antennes en réception qu'en émission, de ne pas exploiter la diversité de manière optimale et d'augmenter la complexité principalement à la réception.

Le document WO 02/061969 concerne l'émission et la réception de signaux dans un système de transmission multi-antennes MIMO, et plus particulièrement, une technique de focalisation permettant, au niveau d'un premier terminal, de déterminer une pluralité de directions d'un signal reçu en provenance d'un second terminal, et de transmettre un signal dans cette pluralité de directions, sous la forme d'une pluralité de sous-flux.

D'autres techniques basées sur des codes à dispersion linéaire ont alors été proposées. Ces techniques recherchent un compromis entre les codes STBC et le multiplexage spatial, en optimisant de façon conjointe la capacité et l'exploitation de la diversité. Malheureusement, aucune méthode de construction systématique de tels codes optimaux n'a, à ce jour, été proposée.

On peut encore citer les techniques de précodage basées sur l'utilisation de matrices de codage unitaires. Bien que ces techniques permettent une exploitation optimale de la diversité, elles reposent sur l'utilisation de matrices de grandes tailles, qui ne sont pas toujours compatibles avec l'utilisation de trames de transmission de petites tailles.

Combinées au multiplexage spatial, ces techniques de précodage linéaire permettent, pour certaines configurations d'antennes, d'optimiser la diversité et la capacité d'un système de transmission. Cependant, ces performances optimales sont atteintes uniquement à fort rapport signal à bruit, et pour des configurations d'antennes où le nombre d'antennes d'émission est inférieur ou égal au nombre d'antennes de réception.

Un autre inconvénient majeur de ces techniques réside dans le récepteur utilisé, qui doit être de type Maximum de Vraisemblance, encore noté MV. Ces récepteurs MV sont complexes à mettre en ouvre, et limitent, du fait de leur complexité, la taille de la matrice de précodage au nombre d'antennes d'émission du système.

Il existe donc un besoin pour une nouvelle technique permettant d'augmenter l'efficacité spectrale et les performances d'une transmission radio tout en réalisant une transmission de très faible complexité, notamment en réception.

**3. Exposé de l'invention**

L'invention propose une solution nouvelle qui ne présente pas l'ensemble de ces inconvénients de l'art antérieur, sous la forme d'un procédé de transmission d'un signal source comprenant une pluralité de séquences binaires, vers $N_R$ antennes de réception, avec $N_R$ supérieur ou égal à 2.

Selon l'invention, un tel procédé met en oeuvre, pour au moins une première séquence binaire dudit signal source, un pré-filtrage de focalisation vers au moins une desdites antennes de réception, dite antenne cible, d'un signal à émettre, ladite antenne cible, et ledit pré-filtrage de focalisation associé, étant choisis en fonction d'une valeur de ladite première séquence binaire destinée à être considérée comme reçue, et une étape d'émission dudit signal pré-filtré.

Ainsi, l'invention repose sur une approche nouvelle et inventive du codage de signal, permettant de coder une valeur binaire d'un signal source, appelée séquence binaire, par une position d'une antenne de réception.

En effet, l'invention associe une valeur binaire à une antenne de réception afin de focaliser un signal à émettre vers cette antenne de réception, dite antenne cible, en fonction de la valeur binaire du signal source destinée à être considérée comme reçue par un récepteur.

De cette manière, un récepteur, en détectant quelle antenne de réception est l'antenne cible, peut identifier la valeur binaire qu'il doit considérer comme reçue, à savoir la valeur binaire associée à l'antenne cible, sans pour autant que cette valeur ait été transmise par l'émetteur.

En effet, le signal focalisé par l'émetteur peut être une simple impulsion, puisque le récepteur peut déduire la valeur binaire à partir de la détection de l'antenne cible et d'une association connue entre une valeur binaire et une antenne.

Ainsi, on peut transmettre plus d'informations, avec une complexité réduite du récepteur.

Le signal à émettre est celui effectivement émis par un émetteur et focalisé vers au moins une antenne cible, choisie en fonction d'une valeur d'une séquence binaire d'un signal source destiné à être considéré comme reçu par un récepteur.

On considère que l'émetteur met en oeuvre au moins une antenne d'émission, et que le récepteur met en ouvre au moins deux antennes de réception.

Si on considère par exemple une séquence binaire correspondant à deux bits, quatre antennes de réception permettent une utilisation optimale du procédé selon l'invention, chacune des quatre antennes étant associée à une des quatre valeurs (00, 01,10,11) que peut prendre une telle séquence binaire.

Selon un mode de réalisation de l'invention, le procédé de transmission comprend une phase préalable de configuration comprenant une étape d'association d'une valeur de séquence binaire à une desdites $N_R$ antennes de réception.

Ainsi, une phase préalable de configuration consiste à associer une valeur binaire à une antenne de réception, et ce pour la ou les séquences binaires du signal source, destinées à être considérées comme reçues. On obtient ainsi une pluralité d'associations d'une valeur binaire à une antenne de réception.

Lorsque l'on souhaite transmettre un signal source selon l'invention, celui-ci est découpé en séquences binaires, selon le nombre d'antennes de réception disponibles par exemple. Pour chaque séquence binaire ainsi définie, on sélectionne l'antenne cible correspondante, à partir des associations déterminées pendant la phase de configuration, puis on focalise un signal à émettre, par exemple une impulsion, ou un signal modulé, sur l'antenne sélectionnée, par préfiltrage, avant d'émettre le signal pré-filtré.

Selon l'invention, la phase de configuration met en ouvre une étape de retournement temporel délivrant au moins un coefficient de pré-filtrage associé à chacune des antennes de réception.

Ainsi, l'invention détermine le pré-filtrage à appliquer au signal à émettre à l'aide d'une technique de retournement temporel, ou focalisation spatiale. De cette manière, on peut associer à chaque antenne de réception un ou plusieurs coefficients de pré-filtrage à appliquer pour focaliser un signal vers cette antenne. Une telle technique de retournement temporel, issue du domaine des ondes acoustiques et des communications sous-marines, est basée sur la propriété d'invariance temporelle de la représentation du canal de transmission et d'une réciprocité de la solution de l'équation de propagation des ondes par inversion du temps. Cette invariance autorise une onde à se « rétropropager » de telle sorte qu'elle peut rejouer la scène à l'identique entre son aller et son retour. Il en résulte une représentation du canal sous la forme d'une fonction d'autocorrélation du canal, ce qui a pour effet de modifier le canal de propagation à l'émission et dans certaines cas, de focaliser l'énergie sur un nombre restreint d'échos de la réponse impulsionnelle du canal de propagation.

On peut ainsi focaliser de l'énergie sur au moins une antenne de réception spécifique choisie.

Un tel coefficient de pré-filtrage correspond par exemple à l'inverse temporel de la réponse impulsionnelle du canal entre une ou plusieurs antennes d'émission et une des $N_R$ antennes de réception. Le pré-filtrage comprend alors par exemple une étape de convolution du signal à émettre par le coefficient de pré-filtrage associée à l'antenne cible.

Selon un aspect particulier de l'invention, le procédé de transmission comprend une étape de transmission, vers au moins une desdites $N_R$ antennes de réception, d'au moins une règle d'association prédéterminée d'une valeur de séquence binaire à une desdites $N_R$ antennes de réception.

Selon ce mode de réalisation de l'invention, la ou les associations déterminées lors de la phase préalable de configuration sont transmises par l'émetteur au récepteur et/ou à une ou plusieurs des antennes de réception, de façon à pouvoir identifier, en réception, la valeur binaire correspondant à l'antenne de réception cible choisie.

Selon d'autres modes de réalisation, la ou les associations déterminées lors de la phase préalable sont connues du récepteur au moment de sa mise en service, par programmation préalable par exemple.

Selon l'invention, le procédé de transmission comprend une étape de mémorisation d'au moins une règle d'association prédéterminée d'une valeur de séquence binaire à une desdites $N_R$ antennes de réception dans une table de correspondance.

Selon un autre aspect de l'invention, le procédé de transmission comprend au moins deux étapes simultanées d'émission d'un signal pré-filtré vers au moins deux antennes cibles distinctes.

Ce mode de réalisation de l'invention permet de transmettre plus d'information simultanément et donc d'augmenter le débit de transmission.

Selon un aspect particulier de l'invention, le procédé de transmission comprend en outre une étape d'émission d'une information d'aide à la détermination, en réception, d'au moins une séquence binaire dudit signal source.

Ainsi, selon ce mode de réalisation, l'invention permet de transmettre une information d'aide à la décision en réception, par exemple pour apporter de l'information supplémentaire en réception sur la ou les focalisations choisies pour la ou les antennes cibles choisies.

Par exemple, dans le cas où plusieurs focalisations simultanées sont mises en oeuvre, cette information d'aide à la décision peut indiquer quel est l'ordre des séquences binaires considérées comme reçues par le récepteur, sur chacune des antennes cibles identifiées, de façon à déterminer le signal source à considérer comme reçu.

Selon un mode de réalisation particulier de l'invention, le procédé de transmission comprend en outre une étape de modulation d'une deuxième séquence binaire dudit signal source, délivrant ledit signal à émettre.

Ainsi, le procédé selon l'invention permet de transmettre également de l'information, sous la forme d'un signal modulé, en plus de l'information codée par la position de l'antenne cible.

Par exemple, dans le cas d'une modulation MAQX, avecX=$2^{nb}$, où nb est le nombre de bits par symbole de modulation, on peut coder $\log_2(N_R)$ bits, correspondant à une première séquence binaire du signal source, par la position de l'antenne cible et les (nb- $\log_2(N_R)$) bits restants, correspondant à une deuxième séquence binaire du signal source, sont modulés classiquement. On obtient ainsi une MAQX simplifiée à une MAQ($2^{nb-\log_2(NR)}$) par focalisation spatiale de l'énergie vers une antenne de réception. On peut alors également simplifier la structure du récepteur en ne mettant en oeuvre qu'une démodulation de type QAM($2^{nb-\log_2(NR)}$) puisque $\log_2(N_R)$ bits du symbole correspondent à la position de l'antenne. De ce fait, on peut transmettre par exemple une modulation MAQ16 en MIMO (Multiple Input Multiple Output) en obtenant les performances d'une modulation QPSK SISO (Single Input Single Output).

En particulier, une telle modulation est une modulation en quadrature comprenant une voie I et une voie Q, et une focalisation distincte pour chacune des voies est mise en oeuvre, la voie I étant focalisée vers une première antenne cible et la voie Q étant focalisée vers une deuxième antenne cible.

Ce mode de réalisation de l'invention consiste à considérer séparément les voies I et Q d'une modulation en quadrature, permettant ainsi de coder deux fois plus de bits, en focalisant la voie I sur une antenne cible et la voie Q sur une autre antenne cible. On notera que la première et la deuxième antennes cibles peuvent être les mêmes, puisque les antennes cibles de la voie I et la voie Q sont choisies indépendamment.

La modulation est par exemple une modulation de type MAQ Y, avec Y=PxP.

Selon un autre mode de réalisation de l'invention, le signal source est un signal multiporteuse de type OFDM et le pré-filtrage est mis en oeuvre sélectivement et simultanément pour au moins deux sous-porteuses OFDM.

Là encore, ce mode de réalisation permet de coder plus de bits d'information, en focalisant indépendamment la voie I et la voie Q, et ce pour chaque sous-porteuse.

L'invention concerne également un procédé de réception d'un signal émis par un émetteur, ledit procédé de réception mettant en oeuvre $N_R$ antennes de réception, avec $N_R$ supérieur ou égal à 2.

Selon l'invention, un tel procédé de réception comprend les étapes suivantes :

- identification d'au moins une antenne, dite antenne cible, parmi lesdites $N_R$ antennes de réception, sur laquelle ledit signal émis est focalisé par ledit émetteur ;
- détermination, en fonction de ladite au moins une antenne cible identifiée, d'une valeur de séquence binaire considérée comme reçue.

Ainsi, une fois que le récepteur a identifié, ou estimé, quelle était l'antenne cible choisie par l'émetteur, on peut déterminer la valeur de la séquence binaire correspondante, en fonction d'au moins une association, prédéterminée à l'émission, d'une valeur de séquence binaire à une antenne de réception.

De cette manière, le signal reçu par l'antenne cible n'est pas décodé en lui-même, mais le fait d'être capable d'identifier l'antenne cible choisie par l'émetteur permet au récepteur de connaître la valeur de la séquence binaire du signal source. La complexité du récepteur est ainsi réduite.

Selon un mode de réalisation de l'invention, lors de l'étape d'identification, l'antenne cible identifiée est l'antenne présentant une puissance de signal reçu la plus élevée.

Selon l'invention, le récepteur ne connaît pas a priori l'antenne cible choisie par l'émetteur et doit donc estimer quelle est cette antenne cible.

Selon l'invention, la détermination de l'antenne cible peut être effectuée de différentes façons.

Comme indiqué ci-dessus, l'une d'elle est par exemple la détection de l'antenne ayant reçu une puissance de signal la plus élevée.

En effet, lors de la focalisation du signal sur une antenne cible, l'énergie du signal reçu n'est pas uniquement concentrée sur l'antenne cible choisie. Elle l'est cependant suffisamment pour pouvoir estimer quelle est l'antenne cible, par simple détection de puissance sur l'ensemble des antennes.

D'autres techniques de détection de l'antenne cible, encore appelées techniques de détection du point focal, sont décrites plus en détail ci-après, en relation avec des modes de réalisation de l'invention.

Selon un mode de réalisation de l'invention, le procédé de réception comprend une étape de réception d'au moins une règle, prédéterminée à l'émission, d'association d'une valeur de séquence binaire à une desdites $N_R$ antennes de réception.

Selon ce mode de réalisation de l'invention, la ou les associations déterminées préalablement par l'émetteur sont transmises au récepteur et/ou à une ou plusieurs des antennes de réception mises en oeuvre.

Selon d'autres modes de réalisation, la ou les associations déterminées par l'émetteur sont connues du récepteur au moment de sa mise en service, par programmation préalable par exemple.

Selon un mode de réalisation particulier de l'invention, le procédé de réception comprend en outre une étape de réception d'une information d'aide à la détermination d'au moins une valeur de séquence binaire considérée comme reçue.

De cette manière, une ou plusieurs antennes supplémentaires peuvent être ajoutées en réception (en plus des antennes cibles choisies pour les focalisations) pour coder de l'information externe à transmettre (phase, ordre d'arrivée des bits ...), appelée information d'aide à la détermination, ou d'aide à la décision.

Par exemple, dans le cas où plusieurs focalisations simultanées sont mises en oeuvre, cette information d'aide à la détermination peut indiquer quel est l'ordre des séquences binaires considérées comme reçues par le récepteur, sur chacune des antennes cibles identifiées, de façon à ce que le récepteur puisse « reconstruire » le signal source à considérer comme reçu.

Selon un autre aspect de l'invention, le procédé de réception comprend en outre une étape de démodulation d'un signal reçu sur l'antenne cible de façon à obtenir une séquence binaire du signal source supplémentaire, dite deuxième séquence binaire.

Ainsi, le procédé selon l'invention permet de recevoir également de l'information, sous la forme d'un signal modulé, en plus de l'information codée par la position de l'antenne cible. Cette information (deuxième séquence binaire) est démodulée, de manière classique, et s'ajoute à l'information (première séquence binaire) déduite de la détection de l'antenne cible telle que décrite précédemment.

L'invention concerne également un émetteur d'un signal source comprenant une pluralité de séquences binaires, vers $N_R$ antennes de réception, avec $N_R$ supérieur ou égal à 2.

Selon l'invention, un tel émetteur comprend, pour au moins une première séquence binaire dudit signal source, des moyens de pré-filtrage de focalisation vers au moins une desdites antennes de réception, dite antenne cible, d'un signal à émettre, ladite antenne cible, et ledit pré-filtrage de focalisation associé, étant choisis en fonction d'une valeur de ladite première séquence binaire destinée à être considérée comme reçue, et des moyens d'émission dudit signal pré-filtré.

Un tel émetteur est notamment adapté à mettre en oeuvre le procédé de transmission décrit précédemment. Il s'agit par exemple d'une station de base, ou d'un terminal de communication.

Cet émetteur pourra bien sûr comporter les différentes caractéristiques relatives au procédé de transmission selon l'invention. Ainsi, les caractéristiques et avantages de cet émetteur sont les mêmes que ceux du procédé de transmission, et ne sont pas détaillés plus amplement.

L'invention concerne également un récepteur d'un signal émis par un émetteur, mettant en oeuvre $N_R$ antennes de réception, avec $N_R$ supérieur ou égal à 2.

Selon l'invention, un tel récepteur comprend :

- des moyens d'identification d'au moins une antenne, dite antenne cible, parmi lesdites $N_R$ antennes de réception, sur laquelle ledit signal émis est focalisé par ledit émetteur ;
- des moyens de détermination, en fonction de ladite au moins une antenne cible identifiée, d'une valeur de séquence binaire considérée comme reçue.

Un tel récepteur est notamment adapté à mettre en oeuvre le procédé de réception décrit précédemment. Il s'agit par exemple d'un terminal de communication, ou d'une station de base.

Ce récepteur pourra bien sûr comporter les différentes caractéristiques relatives au procédé de réception selon l'invention. Ainsi, les caractéristiques et avantages de ce récepteur sont les mêmes que ceux du procédé de réception, et ne sont pas détaillés plus amplement.

L'invention concerne également un signal formé d'une pluralité de temps symboles successifs.

Selon l'invention, un tel signal est focalisé, à chaque temps symbole, sur au moins une antenne spécifique parmi $N_R$ antennes de réception, dite antenne, cible, et véhicule, au cours d'un temps symbole, une valeur binaire fonction de ladite antenne cible.

Toutes les caractéristiques décrites ci-dessus peuvent bien sûr être combinées, en totalité ou en partie, pour la mise en oeuvre d'un procédé de transmission selon l'invention, d'un procédé de réception, d'un émetteur, d'un récepteur, ou encore d'un signal conformes à l'invention.

L'invention concerne enfin un programme d'ordinateur comportant des instructions pour la mise en oeuvre d'un procédé de transmission tel que décrit précédemment, lorsque ce programme est exécuté par un processeur, et un programme d'ordinateur comportant des instructions pour la mise en oeuvre d'un procédé de réception tel que décrit précédemment, lorsque ce programme est exécuté par un processeur.

**4. Liste des figures**

D'autres caractéristiques et avantages de l'invention apparaîtront plus clairement à la lecture de la description suivante d'un mode de réalisation particulier, donné à titre de simple exemple illustratif et non limitatif, et des dessins annexées, parmi lesquels :

- la figure 1 illustre les principales étapes du procédé de transmission selon le principe général de l'invention ;
- la figure 2 présente un exemple de mise en oeuvre du procédé de transmission selon le principe général de l'invention ;
- la figure 3a illustre un exemple de mise en oeuvre du procédé de transmission, et les principales étapes du procédé de réception selon un premier mode de réalisation de l'invention ;
- la figure 3b illustre une variante de ce premier mode de réalisation de l'invention ;
- la figure 4a illustre une représentation d'une constellation d'une modulation 16QAM ;
- la figure 4b illustre un exemple de mise en oeuvre des procédés de transmission, et de réception selon un deuxième mode de réalisation de l'invention ;
- les figures 5a et 5b illustrent un exemple de mise en oeuvre des procédés de transmission et de réception selon un troisième mode de réalisation de l'invention ;
- les figures 6a et 6b illustrent un exemple de mise en oeuvre des procédés de transmission et de réception selon un quatrième mode de réalisation de l'invention ;
- les figures 7 et 8 illustrent respectivement un exemple d'émetteur et de récepteur selon un mode de réalisation de l'invention.

**5. Description d'un mode de réalisation de l'invention**

*5.1 Principe général*

Le principe général de l'invention repose sur l'utilisation de la position des antennes de réception pour coder de l'information à transmettre, par exemple une pluralité de séquences binaires d'un signal source à transmettre.

Pour ce faire, il est nécessaire de pouvoir cibler correctement l'information à transmettre vers l'une des antennes de réception, dite antenne cible.

Une technique connue de retournement temporel est utilisée, de façon à focaliser de l'énergie sur une antenne spécifique d'un réseau d'antennes.

En réception, l'énergie du signal reçu n'est pas uniquement concentrée sur l'antenne cible, mais elle l'est suffisamment pour pouvoir identifier cette antenne cible, par une technique de détection du point focal.

On suppose de plus que le canal est « invariant » sur un grand nombre de symboles transmis.

La position d'une antenne correspond donc à la transmission de bits d'information.

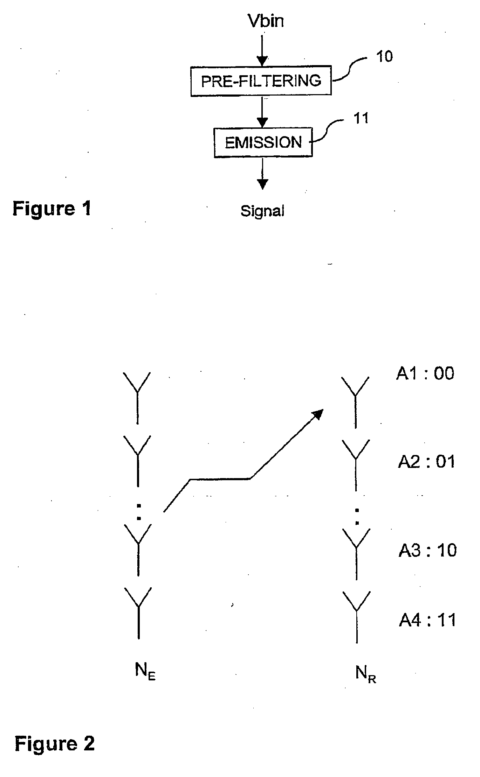

Ainsi, comme illustré en figure 1, le procédé de transmission de l'invention comprend, pour une séquence binaire Vbin d'un signal source à transmettre, une étape de pré-filtrage 10 de focalisation vers une antenne cible, d'un signal à émettre.

Selon un mode de réalisation de l'invention, ce pré-filtrage est déterminé lors d'une phase préalable de configuration mettant en oeuvre une étape de retournement temporel, ou focalisation spatiale, délivrant au moins un coefficient de pré-filtrage associé à chacune des antennes de réception.

De cette manière, on peut associer à chaque antenne de réception un ou plusieurs coefficients de pré-filtrage à appliquer pour focaliser un signal vers cette antenne.

Un tel coefficient de pré-filtrage correspond par exemple à l'inverse temporel de la réponse impulsionnelle du canal entre une ou plusieurs antennes d'émission et une des antennes de réception. Le pré-filtrage comprend alors par exemple une étape de convolution du signal à émettre par le coefficient de pré-filtrage associée à l'antenne cible.

Une fois le pré-filtrage appliqué au signal à émettre, le procédé de transmission de l'invention comprend une étape d'émission 11 de ce signal pré-filtré.

Dans un cas simple, le signal à émettre peut être par exemple une impulsion, à laquelle on applique un pré-filtrage en fonction de la valeur de la séquence binaire à transmettre, et d'une association prédéterminée entre une valeur binaire et une position d'antenne.

La phase préalable de configuration permet donc également de déterminer une pluralité d'associations entre une valeur binaire et une position d'antenne.

On présente par la suite d'autres exemples où le signal à émettre est par exemple un signal modulé, de façon à transmettre plus d'information dans un même temps symbole.

Dans le cas d'un codage binaire simple de la position des antennes, illustré par exemple en figure 2 pour quatre antennes de réception, la position des antennes peut être codée en considérant $N_R = 4$ états possibles, donnés par $N_R = 2^m = 2^2$. Une séquence binaire comprenant deux bits d'information est alors associée à une position d'antenne de réception, et transmise à chaque temps symbole.

Dans ce cas, le nombre d'antennes de réception est nécessairement une puissance de deux.

Toutefois, une antenne supplémentaire peut être ajoutée pour coder de l'information externe à transmettre (phase, ordre d'arrivée des bits ...). Ce principe conduit alors à un codage multi-niveau, ou codage binaire composite, qui nécessite en réception un nombre d'antennes supérieur à deux, mais pas nécessairement égal à une puissance de deux.

Dans l'exemple illustré en figure 2, l'antenne A1 est associée à la séquence binaire de valeur 00, l'antenne A2 est associée à la séquence binaire de valeur 01,

Si on a $N_R$ antennes de réception, on peut coder $\log_2(N_R)$ bits d'information.

L'invention prévoit donc une interopérabilité entre l'entité de transmission et l'entité de réception, notamment en ce qui concerne les associations entre une valeur binaire et une position d'antenne.

Au niveau de l'entité de transmission (par exemple la station de base), de telles associations entre antenne cible et bits d'information peuvent se présenter par exemple sous la forme d'une table de correspondance à deux colonnes, avec dans une colonne l'indice de l'antenne cible de l'entité de réception et dans l'autre colonne la série de bits correspondants.

Ces associations doivent être connues au niveau de la réception.

Par exemple, ces associations sont transmises par l'émetteur (par exemple la station de base) au récepteur, avant la transmission proprement dite du signal source.

Ces associations peuvent également être programmées dans le récepteur, par exemple sous la forme d'une même table de correspondance à deux colonnes précédemment décrite. Elles peuvent enfin être définies directement dans le standard du système d'émission-réception.

De même, le pré-filtrage utilisé à l'émission doit en quelque sorte être connu du récepteur, qui utilise alors une technique de détection du point focal adéquate, pour identifier l'antenne cible.

En effet, si le récepteur cherche l'antenne de plus haute puissance reçue, il faut que l'émetteur ait mis en oeuvre une technique qui maximise la puissance sur l'antenne cible, par exemple le retournement temporel, comme décrit ci-dessus.

On présente ci-après différents modes de réalisation de l'invention.

*5.2 Description détaillée de différents modes de réalisation*

*5.2.1 Premier mode de réalisation*

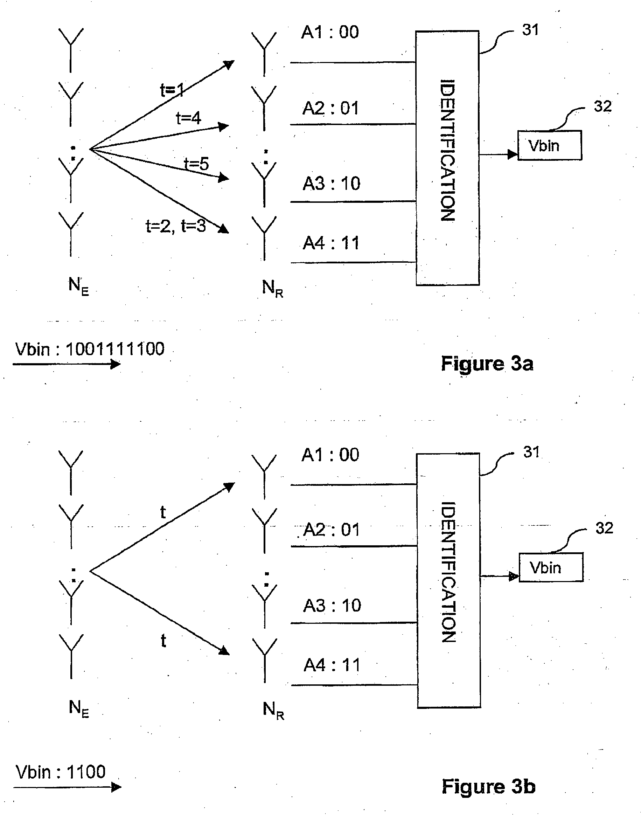

La figure 3a illustre une première variante d'un premier mode de réalisation de l'invention, mettant en oeuvre un codage binaire simple de la position des antennes de réception.

Dans ce cas, on a vu que le nombre d'antennes en réception $N_R$ est une puissance de deux, et plus particulièrement égale à quatre dans cet exemple.

On considère les quatre séquences binaires suivantes, à transmettre successivement, à chaque temps symbole : 00 à t=1, 11 à t=2, 11 à t=3, 10 à t=4 et 10 à t=5. Ces séquences binaires correspondent au signal source à transmettre suivant : 1001111100.

On considère par la suite les associations suivantes, déterminées lors de la phase préalable de configuration du procédé de transmission de l'invention :

- valeur binaire 00 associée à l'antenne A1 ;
- valeur binaire 01 associée à l'antenne A2 ;
- valeur binaire 10 associée à l'antenne A3 ;
- valeur binaire 11 associée à l'antenne A4.

La station émettrice focalise un signal à émettre, par exemple une impulsion, respectivement, à chaque temps symbole t, sur les antennes de réception A1, A4, A4, A2 et A3.

En réception, une étape d'identification 31 de l'antenne cible est mise en oeuvre, à chaque instant d'échantillonnage.

Cette identification correspond à une détection du point focal choisi à l'émission.

Par exemple, chaque antenne A1, A2, A3 et A4 mesure, à chaque instant d'échantillonnage, la puissance reçue (par simple élévation au carré du signal reçu). Une sélection du maximum de puissance correspondant à chaque antenne est ensuite réalisée, de manière à identifier l'antenne cible choisie à l'émission.

Une étape 32 de détermination d'une valeur binaire Vbin considérée comme reçue est ensuite mise en oeuvre par le récepteur, en fonction de l'antenne cible identifiée.

Il y a donc bien correspondance entre le maximum de puissance mesuré, correspondant à une position d'antenne et la séquence binaire transmise.

Le récepteur n'a pas d'autre traitement à réaliser.

D'autres techniques de détection du point focal existent, ainsi que des techniques visant à évaluer la qualité de la focalisation.

Par exemple, des métriques de qualité de focalisation et des méthodes pour les évaluer existent, parmi lesquelles une métrique basée sur la mesure d'un taux de symétrie du signal reçu, une métrique basée sur la mesure de la puissance reçue relativement à une puissance de référence, ou encore une métrique basée sur une mesure normalisée du « delay spread » ou facteur d'étalement temporel, ces métriques ayant des valeurs comprises entre 0 et 1.

En se basant sur la mesure d'une de ces métriques, la détection de l'antenne cible peut être effectuée de deux manières :

- comparaison entre antennes : la métrique de qualité est mesurée pour chacune des antennes, l'antenne ayant la plus forte valeur de métrique est identifiée comme étant l'antenne cible ;
- comparaison par rapport à un seuil : la métrique de qualité est mesurée pour chacune des antennes, l'antenne ayant une valeur de métrique supérieure à un seuil est identifiée comme étant l'antenne cible. Si plusieurs antennes ont une valeur de métrique supérieure au seuil défini, alors la méthode par comparaison d'antennes décrite précédemment est utilisée afin d'identifier l'antenne cible.

La figure 3b illustre une seconde variante du premier mode de réalisation de l'invention, mettant en oeuvre un codage binaire simple de la position des antennes de réception et une focalisation sur plusieurs antennes de réception simultanément, afin d'augmenter le débit de transmission.

Dans l'exemple de la figure 3b, une focalisation simultanée sur les deux antennes A1 et A4 est mise en oeuvre, ce qui permet par exemple de transmettre la séquence binaire 1100 en un seul temps symbole.

Pour déterminer l'ordre des bits en réception, plusieurs techniques peuvent être utilisées.

La première technique consiste à focaliser sur les deux antennes A1 et A4 un signal de puissance différente, en ,affectant par exemple une puissante plus élevée aux bits de poids forts. En réception, il suffit d'analyser la puissance des signaux reçus et d'affecter un ordre aux valeurs binaires correspondant aux antennes cibles identifiées, par ordre croissant des puissances. L'ordre des bits de la séquence binaire transmise correspond alors à l'ordre croissant des puissances des signaux reçus.

Une deuxième technique consiste à coder la phase du signal focalisé en fonction de l'ordre de réception. Par exemple, si la phase du signal reçu est égale à 0, alors on considère que la valeur binaire associée correspond aux deux premiers bits de la séquence binaire transmise, et si la phase est égale à II alors on considère que la valeur binaire associée correspond aux deux derniers bits de la séquence binaire transmise.

Il est bien sûr possible d'étendre ce codage de phase en fonction du nombre d'antennes focalisées simultanément.

De même, si, dans la séquence binaire à transmettre, on trouve des bits voisins identiques, par exemple 0000, on peut également ajuster la valeur de puissance du signal focalisé, en doublant la valeur par exemple. Le récepteur détectant une puissance doublée sait que la séquence binaire associée est 0000, et non pas seulement 00.

*5.2.2 Deuxième mode de réalisation*

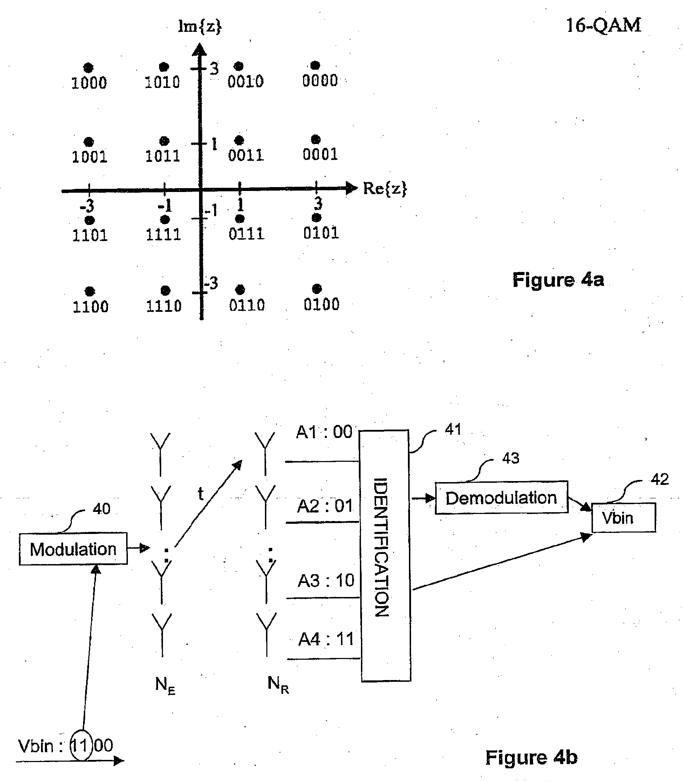

Les figures 4a et 4b illustrent un deuxième mode de réalisation de l'invention, dans le cas où le signal à émettre est un signal modulé.

On considère par exemple une séquence binaire à transmettre modulée par une MAQ16, telle qu'illustrée sur la figure 4a, et comprenant donc quatre bits par symbole.

On considère de plus un système, illustré en figure 4b, mettant en oeuvre quatre antennes de réception, codant chacune pour deux bits, comme dans le premier mode de réalisation.

Il reste donc à l'émetteur à moduler les deux autres bits du symbole, par une MAQ4.

La figure 4b illustre plus particulièrement un exemple de transmission de la séquence binaire 1100, où les deux premiers bits (00) sont codés par focalisation, sur l'antenne A1, et les deux autres bits sont modulés classiquement, lors d'une étape 40.

Ensuite, ce signal modulé est focalisé sur l'antenne A1 au temps symbole t.

En réception, une étape 41 d'identification de l'antenne cible est mise en oeuvre, selon une des techniques décrites précédemment. Cette étape 41 permet de déterminer ensuite une première partie de la séquence binaire à transmettre, c'est-à-dire la valeur binaire associée à l'antenne cible identifiée.

Une étape 43 de démodulation est également mise en oeuvre sur le signal reçu sur cette antenne cible A1. Cette étape permet de déterminer la deuxième partie de la séquence binaire à transmettre, correspondant aux deux bits modulés à l'émission. Dans l'exemple, une démodulation classique de type MAQ4 est réalisée.

Enfin, une étape 42 de détermination d'une valeur binaire Vbin considérée comme reçue est mise en ouvre par le récepteur, à partir des deux séquences binaires déterminées d'une part en fonction de l'identification de l'antenne cible et d'autre part après démodulation du signal reçu sur l'antenne cible identifiée.

De manière plus générale, si on souhaite transmettre un signal modulé par une modulation de type MAQ X où $X=2^{nb}$ où nb est le nombre de bits par symbole de modulation, alors $log_2(N_R)$ bits sont codés par la position de l'antenne et ($nb - log_2(N_R)$) sont modulés classiquement.

Cette configuration induit une contrainte sur le nombre $N_R$ d'antennes de réception, qui doit être égale à une puissance de deux.

On obtient alors une transmission d'une modulation MAQX simplifiée à une MAQ($2^{nb-log_2(NR)}$), par focalisation spatiale de l'énergie vers une antenne réceptrice cible choisie.

On peut alors également simplifier la structure du récepteur en ne mettant en oeuvre qu'une démodulation de type QAM($2^{nb-log_2(NR)}$) puisque $log_2(N_R)$ bits du symbole correspondent à la position de l'antenne.

De ce fait, on peut par exemple transmettre une modulation MAQ16 en MIMO en obtenant les performances d'une modulation QPSK en SISO.

Dans l'exemple de modulation illustrée en figure 4a, si on considère que les deux premiers bits du symbole codent pour une position d'antenne, alors le cadran en haut à droite correspond à la position de l'antenne A1, le cadran en bas à gauche à la position de l'antenne A4, etc.

Il reste au récepteur à déterminer les deux autres bits par une démodulation MAQ4 classique du signal reçu sur l'antenne cible identifiée.

On peut étendre ce mode de réalisation de l'invention à une modulation de type MAQ64, où les deux bits de position d'antenne codent pour le cadran et les quatre autres bits sont démodulés par un démodulateur MAQ16.

Ainsi, une modulation de type MAQX peut être ramenée à une modulation de type MAQY où $Y=2^{(nb-log_2(NR))}$.

De cette manière, avec $N_R$ antennes de réception et une modulation classique MAQY, le procédé selon ce mode de réalisation de l'invention permet de coder nb bits, avec $nb =log_2(N_R)+log_2(Y)$.

On considère maintenant le cas où le codage binaire spatial associé à la position des antennes est composite, c'est-à-dire qu'une ou plusieurs antennes supplémentaires peuvent être ajoutées pour coder de l'information externe à transmettre (phase, ordre d'arrivée des bits ...), comme déjà décrit ci-dessus.

Dans ce cas, le nombre de bits transmis associé à la position des antennes est donné par $nb1=Log_2(N_R)$ et le nombre de bits correspondant à l'information supplémentaire d'aide à la décision en réception pour les bits transmis sur l'antenne correspondante est donné par nb2.

Cette configuration permet de lever la contrainte sur le nombre $N_R$ d'antennes de réception, qui doit toujours être supérieure à deux mais pas nécessairement être égale à une puissance de deux.

Les nb1 et nb2 bits sont ajoutés aux $nb3=Log_2(Y)$ bits transmis classiquement par une modulation numérique de type Y-PSK ou MAQ-Y.

Pour résumer, une séquence binaire de nb bits à transmettre peut être codée comme suit : $nb = nb1 + nb2 + nb3 = log_2(N_R)+nb2+ log_2(Y)$.

L'information externe associée à nb2 peut être multiple.

Elle peut être par exemple associée à un certain type de modulation et de codage focalisé sur une antenne Ni , lorsque le codage et les modulations sont multiples.

Dans ce cas, on peut indicer le nombre de bits d'information transmis sur chaque antenne par : $nb_i= Log_2(N_R)+nb2+Log_2(Y_i)$, où $Y_i$ correspond au nombre d'états de la modulation transmise sur l'antenne Ni.

L'information externe associée à nb2 peut également être associée à un ordonnancement particulier temporel des bits transmis sur chaque antenne, ce qui revient à rajouter un codage supplémentaire de l'information transmise.

L'avantage de cette configuration est visible dans les gains observés lorsqu'on augmente le nombre d'antennes en réception- dans des configurations - MIMO.

L'invention exploite alors d'une part l'information binaire spatiale qui aide à la décision des bits transmis sur chaque antenne et tire parti d'autre part de la diversité du canal associée à un nombre croissant d'antennes en réception qui améliore significativement les performances au niveau lien des systèmes MIMO/SIMO radio.

*5.2.3 Troisième mode de réalisation*

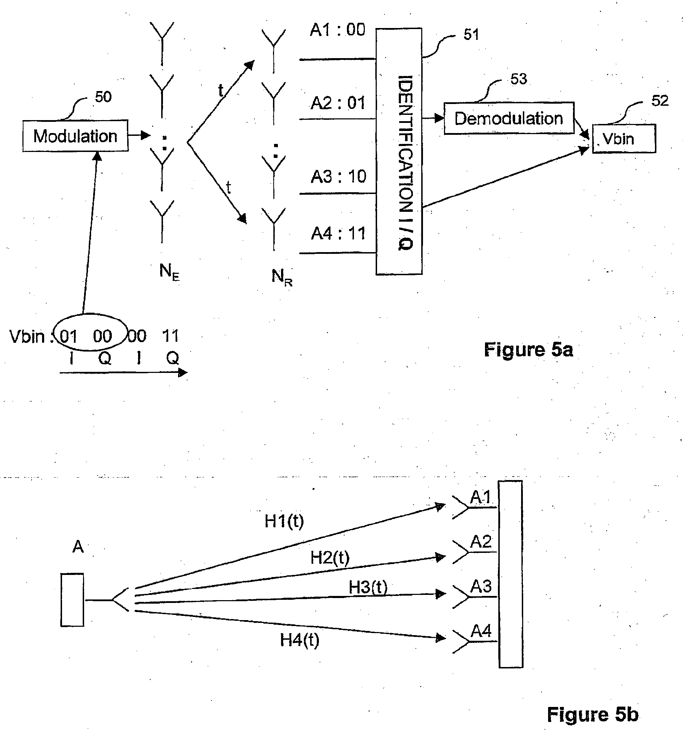

On présente maintenant, en relation avec les figures 5a et 5b, un troisième mode de réalisation de l'invention, dans lequel on considère séparément la voie I et la voie Q pour les modulations de type MAQY, où il existe P tel que Y=PxP.

Par exemple, pour une modulation de type MAQ4, P vaut 2 amplitudes. Pour une modulation de type MAQ16, P vaut 4 amplitudes. Pour une modulation de type MAQ64, P vaut 8 amplitudes. Pour une modulation de type MAQ256, P vaut 16, etc.

On considère par exemple le cas d'une modulation de type MAQ16, comme illustré en figure 4a.

La voie I a P=4 états possibles (+3 +1 -1 -3) et $N_R$ positions spatiales possibles (correspondant aux $N_R$ antennes de réception disponibles) et de même pour la voie Q.

Dans ce cas le nombre de bits pouvant être transmis en un temps symbole est : ($\log_2(N_R)+\log_2(P)$ pour la voie I) + ($\log_2(N_R)+\log_2(P)$ pour la voie Q), c'est-à-dire : $2\times(\log_2(N_R)+\log_2(P))$.

Pour résumer, avec $N_R$ antennes et une modulation classique Mamy, où Y=PxP, on peut coder nb bits, avec nb $=2\times(\log_2(N_R)+\log_2(P))$.

La figure 5a illustre cet exemple, dans le cas d'une modulation MAQ16. En une seule durée symbole, le procédé de transmission selon ce mode de réalisation de l'invention permet de transmettre la séquence binaire Vbin (01 00 00 11), découpée en quatre séquences binaires de deux bits, de la manière suivante :

- une première étape de modulation 50 module les séquences binaires 01 et 00 et les transmet de manière classique, sur les voies I et Q:

  • 01 sont les bits transmis de manière classique sur la voie I (c'est-à-dire que le signal de la voie I a une amplitude de '-1');
  • 00 sont les bits transmis de manière classique sur la voie Q (c'est-à-dire que le signal de la voie Q a une amplitude de '+3').

- les deux séquences binaires restantes 00 et 11 sont ensuite codées par focalisation spatiale, respectivement sur les antennes A1 et A4, de la manière suivante, en considérant les voies I et Q séparément :

  • 00 sont les bits codés par la position spatiale de la voie I (c'est-à-dire que la voie I est focalisée sur l'antenne A1);
  • 11 sont les bits codés par la position spatiale de la voie Q (c'est-à-dire que la voie I est focalisée sur l'antenne A4).

En réception, plusieurs étapes sont nécessaires au récepteur pour déterminer la séquence binaire Vbin considérée comme reçue.

Dans un premier temps, le récepteur sépare le signal de la voie I du signal de la voie Q, pour chacune des quatre antennes, puis identifie quelle antenne est focalisée pour la voie I et pour la voie Q, lors d'une étape 51 d'identification I/Q.

Cette étape permet au récepteur de déterminer ensuite la première séquence binaire 00, par identification de l'antenne cible A1 pour la voie I, et la deuxième séquence binaire 11, par identification de l'antenne cible A4 pour la voie Q.

Le récepteur effectue ensuite une étape 53 de démodulation des signaux reçus sur les antennes cibles A1 et A4, de façon à déterminer la séquence binaire 01, par démodulation du signal de la voie I, et la séquence binaire 00, par démodulation du signal de la voie Q.

L'étape 52 de détermination d'une valeur binaire Vbin considérée comme reçue est mise en oeuvre par le récepteur, à partir des quatre séquences binaires déterminées d'une part en fonction de l'identification des antennes cibles pour chacune des voies I et Q, et d'autre part après démodulation du signal reçu sur les antennes cibles identifiées, pour chacune des voies I et Q.

La figure 5b illustre une représentation d'un système de transmission selon ce mode de réalisation de l'invention, avec une entité A de transmission et une entité de réception mettant en oeuvre quatre antennes de réception A1, A2, A3 et A4. Les associations entre valeurs binaires et positions d'antennes sont celles déjà décrites précédemment.

On considère H1(t), H2(t), H3(t) et H4(t) les réponses impulsionnelles du canal entre l'entité A de transmission et les antennes de réception respectivement A1, A2, A3 et A4.

Dans un premier exemple, si l'on transmet 00 sur la voie I et 00 également sur la voie Q, alors le signal à transmettre par l'entité A de transmission s'écrit :

$$S(t) = H_1(-t) \otimes \cos(2\pi f t) + H_1(-t) \otimes \sin(2\pi f t).$$

Le signal reçu par l'antenne A1 s'écrit:

$$R_1(t) = H_1(t) \otimes H_1(-t) \otimes \cos(2\pi ft) + H_1(t) \otimes H_1(-t) \otimes \sin(2\pi ft).$$

Le signal reçu par l'antenne Ak, pour k≠1, s'écrit :

$$R_k(t) = H_k(t) \otimes H_1(-t) \otimes \cos(2\pi ft) + H_k(t) \otimes H_1(-t) \otimes \sin(2\pi ft).$$

Dans un deuxième exemple, si l'on transmet 00 sur la voie I et 01 sur la voie Q, alors le signal à transmettre par l'entité A de transmission s'écrit :

$$S(t) = H_1(-t) \otimes \cos(2\pi ft) + H_2(-t) \otimes \sin(2\pi ft).$$

Le signal reçu par l'antenne A1 s'écrit:

$$R_1(t) = H_1(t) \otimes H_1(-t) \otimes \cos(2\pi ft) + H_1(t) \otimes H_2(-t) \otimes \sin(2\pi ft).$$

Le signal reçu par l'antenne Ak, pour k#1 et k#2, s'écrit:

$$R_k(t) = H_k(t) \otimes H_1(-t) \otimes \cos(2\pi ft) + H_k(t) \otimes H_2(-t) \otimes \sin(2\pi ft).$$

On constate que l'orthogonalité entre les porteuses sinus et cosinus est potentiellement brisée quand les produits de convolutions entre réponses impulsionnelles sont non réels et que les deux voies I et Q envoient des bits différents, comme dans le deuxième exemple ci-dessus, où la voie I envoie 00 alors que la voie Q envoie 01.

Dans ce cas où l'orthogonalité est brisée, des interférences entre la voie I et la voie Q peuvent exister et le récepteur doit donc mettre en oeuvre une technique supplémentaire pour séparer les deux voies, par exemple un détecteur de type MMSE-IC (de l'anglais. « minimum mean-square error (MMSE)-based itérative interference cancellation » pour « Erreur quadratique moyenne minimale à base de détecteur à annulation d'interférences »).

*5.2.4 . Quatrième mode de réalisation*

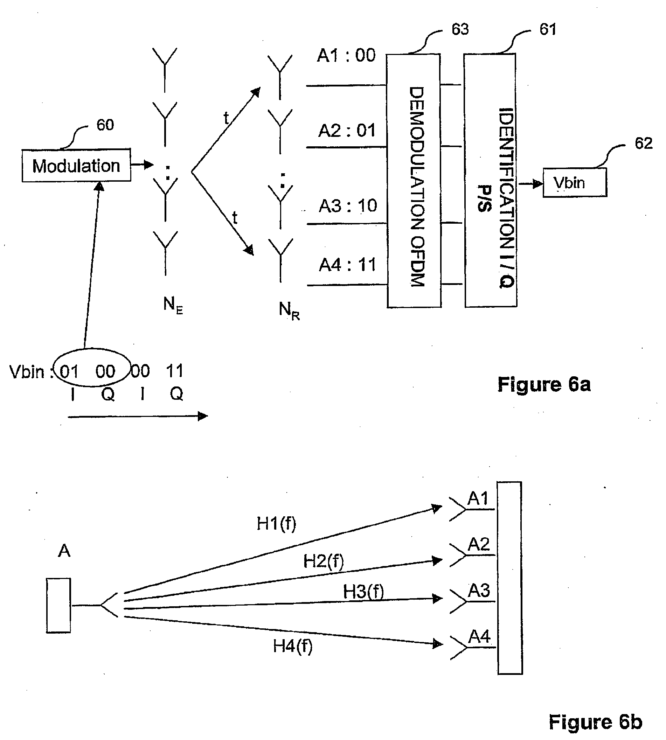

On présente maintenant, en relation avec les figures 6a et 6b , un quatrième mode de réalisation de l'invention, dans lequel on considère séparément la voie I, la voie Q et chaque sous-porteuse; pour une modulation de type OFDM.

Ainsi, la position de l'antenne focalisée est choisie indépendamment pour la voie I, la voie Q et pour chaque sous-porteuse.

Pour résumer, avec $N_R$ antennes et une modulation classique MAQY, où il existe P tel que Y=PxP, et Z sous-porteuses OFDM, on peut coder nb bits, avec :

$$nb = Z \times 2 \times (\log_2(N_R) + \log_2(P)).$$

La figure 6a illustre un tel exemple. Le principe est le même que pour le mode de réalisation précédent, appliqué cette fois à chaque sous-porteuse OFDM.

La séquence binaire Vbin illustrée en figure 6a correspond à une séquence binaire à transmettre pendant un temps symbole, pour une sous-porteuse.

Ainsi, l'étape de modulation 60 est appliquée, comme dans le mode de réalisation précédent, pour chaque sous-porteuse.

De même, en réception, une étape 63 de démodulation est mise en oeuvre, afin de pouvoir ensuite appliquer une pluralité d'étapes 61 d'identification I/Q **P/S,** c'est-à-dire par sous-porteuse, permettant d'identifier, pour chaque sous-porteuse, les antennes cibles pour les voies I et Q séparément.

L'étape 62 de détermination d'une valeur binaire Vbin considérée comme reçue, pour une sous-porteuse, est mise en oeuvre par le récepteur, à partir des quatre séquences binaires déterminées d'une part en fonction de l'identification des antennes cibles pour chacune des voies I et Q, et d'autre part après démodulation du signal reçu sur les antennes cibles identifiées, pour chacune des voies I et Q.

La figure 6b illustre une représentation d'un système de transmission selon ce mode de réalisation de l'invention, avec une entité A de transmission et une entité de réception mettant en oeuvre quatre antennes de réception A1, A2, A3 et A4. Les associations entre valeurs binaires et positions d'antennes sont celles déjà décrites précédemment.

On considère H1(f), H2(f), H3(f) et H4(f) les fonctions de transfert du canal entre l'entité A de transmission et les antennes de réception respectivement A1, A2, A3 et A4.

On considère de plus un système mettant en oeuvre 1024 sous-porteuses OFDM.

Dans un premier exemple, on regarde plus particulièrement les sous-porteuses $f_6$ et $f_7$.

Si l'on transmet, pour la sous-porteuse $f_6$, 00 sur la voie I et 00 également sur la voie Q, alors le signal à transmettre par l'entité A de transmission en $f_6$ s'écrit:

$$S(f_6) = H_1^*(f_6) + jH_1^*(f_6).$$

Le signal reçu par l'antenne A1 en $f_6$ s'écrit :

$$R_1(f_6) = \left|H_1(f_6)\right|^2 + j\left|H_1(f_6)\right|^2.$$

Si l'on transmet, pour la sous-porteuse $f_7$, 00 sur la voie 1 et 01 sur la voie Q, alors le signal à transmettre par l'entité A de transmission en $f_7$ s'écrit :

$$S(f_7) = H_1^*(f_7) + jH_2^*(f_7).$$

Le signal reçu par l'antenne A1 en $f_7$ s'écrit:

$$R_1(f_7) = \left|H_1(f_7)\right|^2 + jH_1(f_7)H_2^*(f_7).$$

Le signal reçu par l' antenne A2 en $f_7$ s'écrit :

$$R_2(f_7) = H_2(f_7)H_1^*(f_7) + j\left|H_1(f_7)\right|^2.$$

On constate là encore que, pour une sous-porteuse donnée, l'orthogonalité entre les porteuses sinus et cosinus est potentiellement brisée quand les produits entre fonctions de transfert sont non réels et que les deux voies I et Q envoient des bits différents.

Dans ce cas où l'orthogonalité est brisée, des interférences entre la voie I et la voie Q peuvent exister et le récepteur doit donc mettre en oeuvre une technique supplémentaire pour séparer les deux voies, par exemple un détecteur de type MMSE-IC (de l'anglais « minimum mean-square error (MMSE)-based iterative interference cancellation » pour «Erreur quadratique moyenne minimale à base de détecteur à annulation d'interférences »).

En revanche, l'orthogonalité entre sous-porteuses n'est pas brisée.

*5.3 Structures d'un émetteur e.t d'un récepteur*

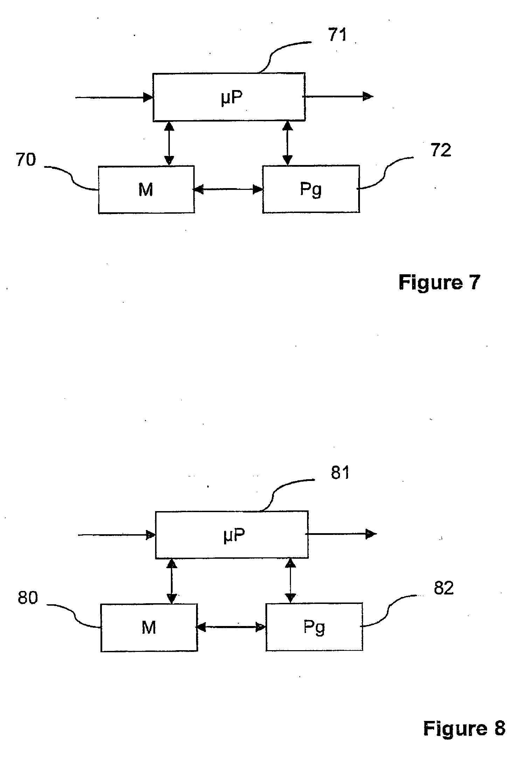

On présente finalement, en relation avec les figures 7 et 8, les structures simplifiées respectivement d'un émetteur et d'un récepteur, selon les modes de réalisation décrits ci-dessus.

Comme illustré en figure 7, un émetteur comprend une mémoire 71 comprenant une mémoire tampon, une unité de traitement 72, équipée par exemple d'un microprocesseur $\mu$P, et pilotée par le programme d'ordinateur 73, mettant en oeuvre le procédé de transmission selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un signal source à transmettre. Le microprocesseur de l'unité de traitement 72 met en oeuvre les étapes du procédé de transmission décrit précédemment, selon les instructions du programme d'ordinateur 73. Pour cela, l'émetteur comprend, outre la mémoire tampon 71, pour au moins une première séquence binaire du signal source, des moyens de pré-filtrage de focalisation vers au moins une des antennes de réception, dite antenne cible, d'un signal à émettre, l'antenne cible, et le pré-filtrage de focalisation associé, étant choisis en fonction d'une valeur de la première séquence binaire destinée à être considérée comme reçue, et des moyens d'émission du signal pré-filtré. Ces moyens sont pilotés par le microprocesseur de l'unité de traitement 72.

Comme illustré en figure 8, un récepteur comprend une mémoire 81 comprenant une mémoire tampon, une unité de traitement 82, équipée par exemple d'un microprocesseur μP, et pilotée par le programme d'ordinateur 83, mettant en oeuvre le procédé de transmission selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal émis par un émetteur. Le microprocesseur de l'unité de traitement 82 met en oeuvre les étapes du procédé de réception décrit précédemment, selon les instructions du programme d'ordinateur 83. Pour cela, le récepteur comprend, outre la mémoire tampon 81, des moyens d'identification d'au moins une antenne, dite antenne cible, parmi les $N_R$ antennes de réception, sur laquelle le signal émis est focalisé par l'émetteur, et des moyens de détermination, en fonction de l'antenne cible identifiée, d'une valeur de séquence binaire considérée comme reçue. Ces moyens sont pilotés par le microprocesseur de l'unité de traitement 82.

**Revendications**

1. Procédé de transmission d'un signal source comprenant une pluralité de séquences binaires, vers $N_R$ antennes de réception, avec $N_R$ supérieur ou égal à 2, **caractérisé en ce qu'**il met en oeuvre, pour au moins une première séquences binaire dudit signal source, un pré-filtrage de focalisation (10) vers au moins une desdites antennes de réception, dite antenne cible, d'un signal à émettre, ladite antenne cible, et ledit pré-filtrage de focalisation associé, étant choisis en fonction d'une valeur de ladite première séquence binaire destinée à être considérée comme reçue, et une étape d'émission (11) dudit signal pré-filtré.

2. Procédé de transmission d'un signal source selon la revendication 1, **caractérisé en ce qu'**il comprend une phase préalable de configuration comprenant une étape d'association d'une valeur de séquence binaire à une desdites $N_R$ antennes de réception.

3. Procédé de transmission d'un signal source selon la revendication 1, **caractérisé en ce qu'**il comprend une étape de transmission, vers au moins une desdites $N_R$ antennes de réception, d'au moins une règle d'association prédéterminée d'une valeur de séquence binaire à une desdites $N_R$ antennes de réception.

4. Procédé de transmission d'un signal source selon la revendication 1, **caractérisé en ce qu'**il comprend au moins deux étapes simultanées d'émission d'un signal pré-filtré vers au moins deux antennes cibles distinctes.

5. Procédé de transmission d'un signal source selon la revendication 1, **caractérisé en ce qu'**il comprend en outre une étape d'émission d'une information d'aide à la détermination, en réception, d'au moins une séquence binaire dudit signal source.

6. Procédé de transmission d'un signal source selon la revendication 1, **caractérisé en ce qu'**il comprend en outre une étape de modulation d'une deuxième séquence binaire dudit signal source, délivrant ledit signal à émettre.

7. Procédé de transmission d'un signal source selon la revendication 6, **caractérisé en ce que** ladite modulation est une modulation en quadrature comprenant une voie **I** et une voie Q, et **en ce qu'**on met en oeuvre une focalisation distincte pour chacune desdites voies, ladite voie I étant focalisée vers une première antenne cible et ladite voie Q étant focalisée vers une deuxième antenne cible.

8. Procédé de transmission d'un signal source selon la revendication 1, **caractérisé en ce que** ledit signal source est un signal multiporteuse de type OFDM et **en ce que** ledit pré-filtrage est mis en oeuvre sélectivement et simultanément pour au moins deux sous-porteuses OFDM.

9. Procédé de réception d'un signal émis par un émetteur, ledit procédé de réception mettant en oeuvre $N_R$ antennes de réception, avec $N_R$ supérieur ou égal à 2, **caractérisé en ce que** ledit procédé de réception comprend les étapes suivantes :

- identification (31), d'au moins une antenne, dite antenne cible, parmi lesdites $N_R$ antennes de réception, sur laquelle ledit signal émis est focalisé par ledit émetteur;
- détermination (32) en fonction de ladite au moins une antenne cible identifiée, d'une valeur de séquence binaire considérée comme reçue.

**10.** Procédé de réception d'un signal émis selon la revendication 9, **caractérisé en ce que**, lors de ladite étape d'identification, ladite antenne cible identifiée est l'antenne présentant une puissance de signal reçu la plus élevée.

**11.** Procédé de réception d'un signal selon la revendication 9, **caractérisé en ce qu'**il comprend une étape de réception d'au moins une règle, prédéterminée à l'émission, d'association d'une valeur de séquence binaire à une desdites $N_R$ antennes de réception.

**12.** Procédé de réception-d'un signal selon la revendication 9, **caractérisé en ce qu'**il comprend en outre une étape de réception d'une information d'aide à la détermination d'au moins une valeur de séquence binaire considérée comme reçue.

**13.** Emetteur d'un signal source comprenant une pluralité de séquences binaires, vers $N_R$ antennes de réception, avec $N_R$ supérieur ou égal à 2,
**caractérisé en ce qu'**il comprend, pour au moins une première séquence binaire dudit signal source, des moyens de pré-filtrage de focalisation (10) vers au moins une desdites antennes de réception, dite antenne cible, d'un signal à émettre,
ladite antenne cible, et ledit pré-filtrage de focalisation associé, étant choisis en fonction d'une valeur de ladite première séquence binaire destinée à être considérée comme reçue.
et des moyens d'émission (11) dudit signal pré-filtré.

**14.** Récepteur d'un signal émis par un émetteur, mettant en oeuvre $N_R$ antennes de réception, avec $N_R$ supérieur ou égal à 2,
**caractérisé en ce qu'**il comprend :

- des moyens d'identification (31) d'au moins une antenne, dite antenne cible, parmi lesdites $N_R$ antennes de réception, sur laquelle ledit signal émis est focalisé par ledit émetteur;
- des moyens de détermination (32) en fonction de ladite au moins une antenne cible identifiée, d'une valeur de séquence binaire considérée comme reçue.

**15.** Signal formé d'une pluralité de temps symboles successifs, **caractérisé en ce qu'**il est focalisé, à chaque temps symbole, sur au moins une antenne spécifique parmi $N_R$ antennes de réception, dite antenne cible, et **en ce qu'**il véhicule, au cours d'un temps symbole, une valeur binaire fonction de ladite antenne cible.

**16.** Programme d'ordinateur comportant des instructions pour la mise en oeuvre d'un procédé selon la revendication 1 lorsque ce programme est exécuté par un processeur.

**17.** Programme d'ordinateur comportant des instructions pour la mise en oeuvre d'un procédé selon la revendication 9 lorsque ce programme est exécuté par un processeur.

**Patentansprüche**

**1.** Verfahren zum Übertragen eines Quellensignals, das mehrere Binärsequenzen enthält, zu $N_R$ Empfangsantennen, wobei $N_R$ größer oder gleich 2 ist,
**dadurch gekennzeichnet, dass** es für wenigstens eine erste Binärsequenz des Quellensignals eine Fokussierungsvorfilterung (10) zu wenigstens einer der Empfangsantennen, die Zielantenne genannt wird, eines auszusendenden Signals ausführt,
wobei die Zielantenne und die zugeordnete Fokussierungsvorfilterung als Funktion eines Wertes der ersten Binärsequenz, die dafür bestimmt ist, als empfangen angesehen zu werden, gewählt werden,
und einen Schritt des Sendens (11) des vorgefilterten Signals ausführt.

**2.** Verfahren zum Übertragen eines Quellensignals nach Anspruch 1, **dadurch gekennzeichnet, dass** es eine vorhergehende Konfigurationsphase umfasst, die einen Schritt des Zuordnens eines Wertes der Binärsequenz zu einer der $N_R$ Empfangsantennen umfasst.

3.  Verfahren zum Übertragen eines Quellensignals nach Anspruch 1, **dadurch gekennzeichnet, dass** es einen Schritt des Übertragens zu wenigstens einer der $N_R$ Empfangsantennen wenigstens einer vorgegebenen Zuordnungsregel eines Binärsequenz-Wertes zu einer der $N_R$ Empfangsantennen umfasst.

4.  Verfahren zum Übertragen eines Quellensignals nach Anspruch 1, **dadurch gekennzeichnet, dass** es wenigstens zwei gleichzeitige Schritte des Aussendens eines vorgefilterten Signals zu wenigstens zwei verschiedenen Zielantennen umfasst.

5.  Verfahren zum Übertragen eines Quellensignals nach Anspruch 1, **dadurch gekennzeichnet, dass** es außerdem einen Schritt des Sendens von Informationen, die das Bestimmen beim Empfang wenigstens einer Binärsequenz des Quellensignals unterstützen, umfasst.

6.  Verfahren zum Übertragen eines Quellensignals nach Anspruch 1, **dadurch gekennzeichnet, dass** es außerdem einen Schritt des Modulierens einer zweiten Binärsequenz des Quellensignals, der das auszusendende Signal liefert, umfasst.

7.  Verfahren zum Übertragen eines Quellensignals nach Anspruch 6, **dadurch gekennzeichnet, dass** die Modulation eine Quadratur-Modulation ist, die einen I-Weg und einen Q-Weg umfasst, und dass es eine unterschiedliche Fokussierung für jeden der Wege ausführt, wobei der I-Weg zu einer ersten Zielantenne fokussiert wird und der Q-Weg zu einer zweiten Zielantenne fokussiert wird.

8.  Verfahren zum Übertragen eines Quellensignals nach Anspruch 1, **dadurch gekennzeichnet, dass** das Quellensignal ein Mehrfachträgersignal des OFDM-Typs ist und dass die Vorfilterung wahlweise und gleichzeitig für wenigstens zwei OFDM-Unterträger ausgeführt wird.

9.  Verfahren zum Empfangen eines von einem Sender ausgesendeten Signals, wobei das Empfangsverfahren $N_R$ Empfangsantennen betreibt, wobei $N_R$ größer oder gleich 2 ist, **dadurch gekennzeichnet, dass** das Empfangsverfahren die folgenden Schritte umfasst:

    - Identifizieren (31) wenigstens einer Antenne, die Zielantenne genannt wird, unter den $N_R$ Empfangantennen zu der das ausgesendete Signal durch den Sender fokussiert wird;
    - Bestimmen (32) als Funktion der wenigstens einen Zielantenne eines Wertes der Binärsequenz, die als empfangen angesehen wird.

10. Verfahren zum Empfangen eines ausgesendeten Signals nach Anspruch 9, **dadurch gekennzeichnet, dass** in dem Identifizierungsschritt die identifizierte Zielantenne jene Antenne ist, die die höchste Leistung des empfangenen Signals aufweist.

11. Verfahren zum Empfangen eines Signals nach Anspruch 9, **dadurch gekennzeichnet, dass** es einen Schritt des Empfangens wenigstens einer beim Senden vorgegebenen Regel zum Zuordnen eines Binärsequenz-Wertes zu einer der $N_R$ Empfangsantennen umfasst.

12. Verfahren zum Empfangen eines Signals nach Anspruch 9, **dadurch gekennzeichnet, dass** es außerdem einen Schritt des Empfangens von Informationen, um das Bestimmen wenigstens eines Wertes einer als empfangen angesehenen Binärsequenz zu unterstützen, umfasst.

13. Sender eines Quellensignals, das mehrere Binärsequenzen enthält, zu $N_R$ Empfangsantennen, wobei $N_R$ größer oder gleich 2 ist, **dadurch gekennzeichnet, dass** es umfasst: für wenigstens eine erste Binärsequenz des Quellensignals Mittel zur Fokussierungsvorfilterung (10) zu wenigstens einer der Antennen, die Zielantenne genannt wird, eines auszusendenden Signals, wobei die Zielantenne und die zugeordnete Fokussierungs-Vorfilterung als Funktion eines Wertes der ersten Binärsequenz, die dazu bestimmt ist, als empfangen angesehen zu werden, gewählt werden, und Mittel zum Senden (11) des vorgefilterten Signals.

14. Empfänger eines von einem Sender ausgesendeten Signals, der $N_R$ Empfangsantennen betreibt, wobei $N_R$ größer oder gleich 2 ist,
**dadurch gekennzeichnet, dass** er Folgendes umfasst:

- Mittel zum Identifizieren (31) wenigstens einer Antenne, die Zielantenne genannt wird, unter den $N_R$ Empfangsantennen, auf die das ausgesendete Signal durch den Sender fokussiert wird;
- Mittel zum Bestimmen (32) als Funktion der wenigstens einen identifizierten Zielantenne eines Wertes einer Binärsequenz, der als empfangen angesehen wird.

15. Signal, das aus mehreren aufeinander folgenden Symbolzeiten gebildet ist, **dadurch gekennzeichnet, dass** es zu jeder Symbolzeit auf wenigstens eine bestimmte Antenne unter $N_R$ Empfangsantennen, die Zielantenne genannt wird, fokussiert ist und dass es während einer Symbolzeit einen Binärwert führt, der eine Funktion der Zielantenne ist.

16. Computerprogramm, das Befehle enthält, um ein Verfahren nach Anspruch 1 auszuführen, wenn dieses Programm durch einen Prozessor ausgeführt wird.

17. Computerprogramm, das Befehle enthält, um ein Verfahren nach Anspruch 9 auszuführen, wenn dieses Programm von einem Prozessor ausgeführt wird.

**Claims**

1. Method for transmitting a source signal comprising a plurality of binary sequences, to $N_R$ reception antennas, with $N_R$ greater than or equal to 2, **characterized in that** it implements, for at least one first binary sequence of said source signal, a focusing pre-filtering (10) towards at least one of said reception antennas, the so-called target antenna, of a signal to be sent,
said target antenna, and said associated focusing pre-filtering, being chosen as a function of a value of said first binary sequence intended to be considered to have been received,
and a step of sending (11) said pre-filtered signal.

2. Method for transmitting a source signal according to Claim 1, **characterized in that** it comprises a prior configuration phase comprising a step of associating a binary sequence value with one of said $N_R$ reception antennas.

3. Method for transmitting a source signal according to Claim 1, **characterized in that** it comprises a step of transmitting, to at least one of said $N_R$ reception antennas, at least one predetermined rule for associating a binary sequence value with one of said $N_R$ reception antennas.

4. Method for transmitting a source signal according to Claim 1, **characterized in that** it comprises at least two simultaneous steps of sending a pre-filtered signal towards at least two distinct target antennas.

5. Method for transmitting a source signal according to Claim 1, **characterized in that** it furthermore comprises a step of sending an item of information for aiding the determination, on reception, of at least one binary sequence of said source signal.

6. Method for transmitting a source signal according to Claim 1, **characterized in that** it furthermore comprises a step of modulating a second binary sequence of said source signal, delivering said signal to be sent.

7. Method for transmitting a source signal according to Claim 6, **characterized in that** said modulation is a quadrature modulation comprising an I pathway and a Q pathway, and **in that** a distinct focusing is implemented for each of said pathways, said I pathway being focused towards a first target antenna and said Q pathway being focused towards a second target antenna.

8. Method for transmitting a source signal according to Claim 1, **characterized in that** said source signal is a multicarrier signal of OFDM type and **in that** said pre-filtering is implemented selectively and simultaneously for at least two OFDM sub-carriers.

9. Method for receiving a signal sent by a sender, said receiving method implementing $N_R$ reception antennas, with $N_R$ greater than or equal to 2, **characterized in that** said receiving method comprises the following steps:

identification (31) of at least one antenna, the so-called target antenna, from among said $N_R$ reception antennas, on which said signal sent is focused by said sender;

determination (32), as a function of said at least one identified target antenna, of a binary sequence value considered to have been received.

10. Method for receiving a signal sent according to Claim 9, **characterized in that**, during said identification step, said identified target antenna is the antenna exhibiting a highest received-signal power.

11. Method for receiving a signal according to Claim 9, **characterized in that** it comprises a step of receiving at least one rule, predetermined when sending, for associating a binary sequence value with one of said $N_R$ reception antennas.

12. Method for receiving a signal according to Claim 9, **characterized in that** it furthermore comprises a step of receiving an item of information for aiding the determination of at least one binary sequence value considered to have been received.

13. Transmitter of a source signal comprising a plurality of binary sequences, to $N_R$ reception antennas, with $N_R$ greater than or equal to 2, **characterized in that** it comprises, for at least one first binary sequence of said source signal, means of focusing pre-filtering (10) towards at least one of said reception antennas, the so-called target antenna, of a signal to be sent, said target antenna, and said associated focusing pre-filtering, being chosen as a function of a value of said first binary sequence intended to be considered to have been received, and means for sending (11) said pre-filtered signal.

14. Receiver of a signal sent by a transmitter, implementing $N_R$ reception antennas, with $N_R$ greater than or equal to 2, **characterized in that** it comprises:

- means for identifying (31) at least one antenna, the so-called target antenna, from among said $N_R$ reception antennas, on which said signal sent is focused by said transmitter;
- means for determining (32), as a function of said at least one identified target antenna, a binary sequence value considered to have been received.

15. Signal formed of a plurality of successive symbol times, **characterized in that** it is focused, at each symbol time, on at least one specific antenna from among $N_R$ reception antennas, the so-called target antenna, and **in that** it conveys, in the course of a symbol time, a binary value dependent on said target antenna.

16. Computer program comprising instructions for the implementation of a method according to Claim 1 when this program is executed by a processor.

17. Computer program comprising instructions for the implementation of a method according to Claim 9 when this program is executed by a processor.

Vbin

PRE-FILTERING — 10

EMISSION — 11

Signal

**Figure 1**

A1 : 00

A2 : 01

A3 : 10

A4 : 11

$N_E$

$N_R$

**Figure 2**

A1 : 00
A2 : 01
A3 : 10
A4 : 11

IDENTIFICATION    31

Vbin    32

t=1
t=4
t=5
t=2, t=3

$N_E$    $N_R$

Vbin : 1001111100

**Figure 3a**

A1 : 00
A2 : 01
A3 : 10
A4 : 11

IDENTIFICATION    31

Vbin    32

t

t

$N_E$    $N_R$

Vbin : 1100

**Figure 3b**

16-QAM

Im{z}

•     •     •     •
1000   1010   3  0010    0000

•     •     •     •
1001   1011   1  0011    0001

-3     -1      1      3     Re{z}
          -1
•     •     •     •
1101   1111     0111    0101

          -3
•     •     •     •
1100   1110     0110    0100

**Figure 4a**

A1 : 00

A2 : 01

A3 : 10

A4 : 11

IDENTIFICATION    41

Demodulation    43

Vbin    42

40

Modulation

t

$N_E$        $N_R$

Vbin : 1100

**Figure 4b**

Figure 5a

Figure 5b

Figure 6a

Figure 6b

**Figure 7**

**Figure 8**

**EP 2 514 113 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 02061969 A